# EUROPEAN PATENT SPECIFICATION

(11) **EP 3 248 469 B1**
(45) Date of publication and mention of the grant of the patent: **09.07.2025**
(21) Application number: 17173321.5
(22) Date of filing: 29.05.2017
(51) Int. Cl.: A23J 1/00, A23J 1/02, A23J 1/04, A23J 1/10, A23K 10/26

(54) **PROCESS FOR MAKING A PROTEIN HYDROLYSATE WITH "NUTRACEUTICAL" FUNCTIONAL FEATURES OBTAINED FROM PROCESS WASTE OF SLAUGHTERHOUSES**
VERFAHREN ZUR HERSTELLUNG EINES PROTEINHYDROLYSATS MIT "NUTRACEUTICAL" FUNKTIONSMERKMALEN, DAS AUS PROZESSABFÄLLEN VON SCHLACHTHÖFEN ERHALTEN WIRD
PROCÉDÉ DE FABRICATION D'UN HYDROLYSAT DE PROTÉINE AVEC DES CARACTÉRISTIQUES FONCTIONNELLES «NUTRACEUTIQUES» OBTENU À PARTIR DE DÉCHETS DE TRAITEMENT D'ABATTOIRS

(30) Priority: 27.05.2016 IT UA20163854
(43) Date of publication of application: 29.11.2017
(73) Proprietor: Racof S.r.l., 43029 Traversetolo (PR) (IT)
(72) Inventor: GAMBARELLI, Enzo, 43029 TRAVERSETOLO (PR) (IT)
(74) Representative: Dallaglio, Fabrizio

(56) References cited:
- WO-A1-2004/021797
- WO-A1-2007/097633
- CN-A- 104 585 475
- US-A- 5 053 234
- US-A1- 2011 129 565

## Description

### SCOPE OF THE INVENTION

The present invention relates to a process for the transformation of by-products of the processing of animal slaughterhouses for the continuous production, according to food grade requirements, of a protein fraction, a lipid fraction and a mineral fraction, single products with predefined organoleptic, nutritional and functional features.

In particular, the present invention relates to a process for making a protein hydrolysate with "nutraceutical" functional features obtained from the process animal by-products of slaughterhouses.

### PRIOR ART

There are several systems for processing the category 3 slaughter by-products ranging from treatment at high temperatures, for example in autoclave at 130 °C, to the various forms of hydrolysis to obtain products which, by their very nature, are mainly used as ingredients in the feed industry (livestock, pets).

### DESCRIPTION AND ADVANTAGES OF THE INVENTION

The invention relates to the transformation process, i.e. the fractioning, of raw material with enzymatic hydrolysis reaction modified to adjust the enzymatic action and the process parameters to the type of raw material used (animal species, type of by-product), and controlled separation through distinct processing steps, of the protein fraction, the lipid fraction and the mineral fraction, for the continuous production of products with predefined and constant functional and nutritional features, allowing a targeted use thereof, as they are three separate products that can be used independently.

The starting substrate used for the fractioning process may be: single type of by-product, or mixtures of different types of by-products of slaughter with the same animal source.

The above recipe specifications are the answer to the need of ensuring continuity of the "fresh meat" collection operations such as animal slaughter by-products, and/or freezing and storage thereof and with an industrial transformation process to ensure the production and availability of controlled ingredients for the preparation of feed for pets.

WO2004/021797 and US2011/129565 describe processes known in the art.

The object of the present invention is to provide an improved process and relative plant for making a protein hydrolysate with "nutraceutical" functional features obtained from process the animal by-products of slaughterhouses with a simple, rational and rather cost-effective solution.

This is achieved by means of a process according to the independent claim 1 and by means of a plant according to claim 3. The dependent claims describe preferred and/or particularly advantageous aspects of the invention.

The subject process, and the relative plant, carries out the "fractioning" of raw materials and the attainment of respective products at an industrial level. The transformation system therefore allows the extraction and subsequent concentration of proteins.

More generally, the products obtained by such process may be of four types, namely:
- Protein - lipid fraction, with no solid residues (bones): this is an intermediate component of the process that can be used directly if the process, object of the patent application, is part of the production chain starting from the harvesting/processing of fresh raw materials - category 3 animal slaughter by-products - and is completed with a production plant of feed for pets,
- Mineral fraction (solid) consisting of bones/bone residues,
- Lipid fraction (low acidity and containing the liposoluble vitamins present in the raw material),
- Protein fraction (peptides): this is an intermediate component of the process that can be used directly if the process, object of the patent application, is part of the production chain starting from the harvesting/processing of fresh raw materials - category 3 animal slaughter by-products - and is completed with a production plant of feed for pets,
- Concentrated protein fraction (amino acids).

The invention brings many advantages, including:
- Separation by fractioning of the various components (protein, lipids, mineral fraction) allowing a targeted use thereof.
- Constant standardized physical-chemical and nutritional features for each type of products made in relation to the source of the raw material (animal species) and process applied.
- Preventing food intolerances from proteins (product consisting of amino acids)
- Ease of dosing in industrial use for specific formulations.

Other environmental advantages of the plant are also apparent, which exhibits the following emissions:
- Water vapor from cooling tower,
- No emissions into the atmosphere by interception and recovery of the vapors that are generated during the hot steps of the process,
- Delivery all non-reusable condensate discharges to treatment plant,
- The plant in full operation has a noise level of less than 80 dB, in accordance with law requirements.

Said objects and advantages are all achieved by the process and plant for making a protein hydrolysate with "nutraceutical" functional features obtained from process animal by-products of slaughterhouses, object of the present invention, which is characterized by the appended claims.

### BRIEF DESCRIPTION OF THE FIGURES

This and other features will become more apparent from the following description of some of the configurations, illustrated purely by way of non-limiting example in the accompanying drawing, in which:

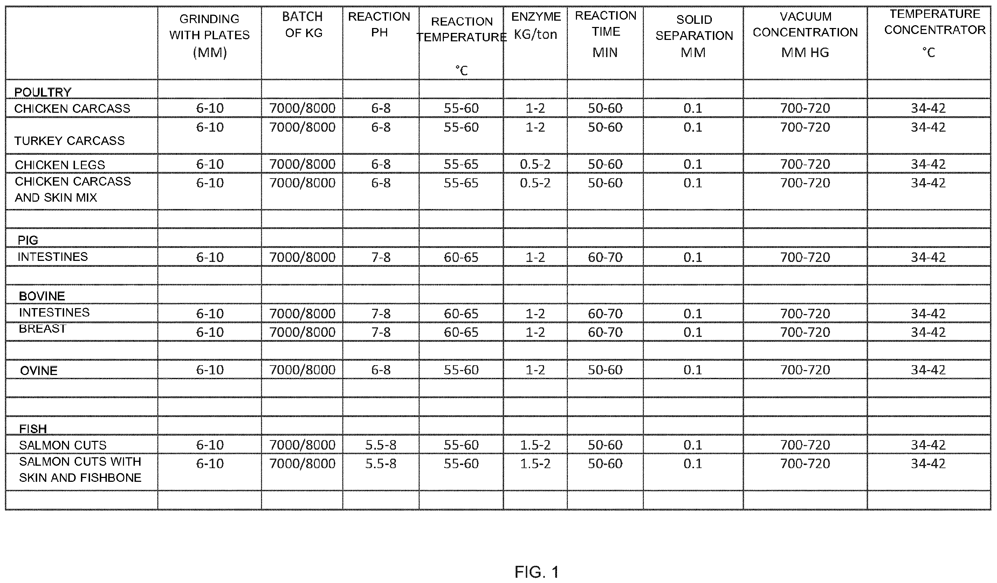

- Figure 1: shows the table of the parameters implemented with the subject process.

### DESCRIPTION OF THE INVENTION

The process provides for working on an initial substrate.

The preparation of the initial substrate, i.e. the type of slaughter by-product and animal source of raw material, determines the efficiency, that is, the industrial yield and the effectiveness of the fractioning process, meaning type and functional and nutritional features of the products manufactured.

The modified enzymatic hydrolysis process is conducted with the use of optimal time/temperature parameters, summarized in the table in figure 1.

With these parameters, the process allows preventing the effects of damage from an organoleptic and nutritional point of view both to the protein moieties and to the lipid ones; while currently with the current methods, this result cannot be achieved.

The experimental production tests, carried out on a pilot plant using different types of slaughter by-products for the fractioning process: poultry, pigs, sheep, fish, have highlighted the achievement of products with constant features (organoleptic, chemical, physical, microbiological) so as to define appropriate technical specifications (raw materials, process, product) which are the subject of this invention.

Depending on the nature of the starting raw material that relates to the source (poultry, beef, pork, sheep, fish, mollusks, crustaceans), type (carcasses, offal, skin, other cuts ...), the formulation characteristics (particle size, ingredients) were established to define the optimum conditions during the hydrolysis step and subsequent mechanical separation of the solid phase.

The solid substrate to be fractioned is transferred by pumping, after adequate grinding, in a range of from 6 to 10 mm, to a reactor within which the enzymatic hydrolysis reaction is activated.

The addition of an alkylating reagent is contemplated, preferably selected from NH3OH, KOH, NaOH; this brings the environment to a basic pH value and preferably in a range of 7.5-9.0. This pH value allows the addition of the proteolytic enzyme, which activates the hydrolysis process.

The above process is a batch process with continuous product handling; it is conducted at low temperatures, where this term identifies a range of between 50 and 60 °C; this process parameter prevents lipid and protein fraction damaging processes.

The reactor is provided with an indirect heating system, more specifically comprising an outer heating sector jacket with steam circulation.

Moreover, the reactor is provided with a mechanical stirring system, comprising a rotating shaft, with adjustable speed by inverter, with propeller as a stirrer; with this solution it is possible to maintain the substrate being worked in suspension.

The process parameter data are set on the program that manages the work cycle.

The process parameters used are: time, indirect heating temperature, pH, vacuum level (particularly in the use of the concentrator).

At the end of the enzymatic hydrolysis step (stabilization of the pH value in the range 7.0-7.5), the enzymatic system is inactivated.

After said inactivation, the fluid is pumped through at least one solid phase separation device, i.e. the bones.

As an example, the fluid is pumped through a first device for the coarse separation of the solid fraction, which is a vibrating screen.

Said separation is followed by a further step to at least one decanter for the fine separation of the solid phase.

Said separated solid phase is then subjected to a drying process, while the remaining liquid phase is pumped into a centrifuge where the further separation of the lipid phase from the protein phase takes place.

At this point, the liquid oil-free protein phase is pumped into a vacuum concentrator medium for the concentration to the predetermined Brix degree values of 50 - 60 brix.

The product packaging and storage - lipid phase, concentrated protein phase - are established and defined in order to ensure the integrity thereof.

### THE PLANT

The plant adapted to carry out the process claimed comprises at least one reactor, preferably two, with heating jackets operating with indirect steam, a tube-bundle heat exchanger with indirect steam heating, a separator for solid fraction and a centrifugal separator for liquid moieties, a concentration plant. A series of transfer and/or storage tanks are provided to serve the equipment for both the products obtained and for the process fluids.

At least one meat grinding device is also present and used to chop the substrate to be treated.

The minced meat (where meat is to be understood as the substrate as indicated above) is introduced in at least a first reactor with the addition of water and enzymes, and then the mixture is heated by steam coming from a generator and at a temperature of between 55 and 65 °C for a period varying according to the type of product, preferably between 50 and 70 minutes.

Using at least one pump, the raw ground matter is transferred.

As mentioned, there is at least one, but preferably at least two, reactors with stirring system and indirect heating; said indirect heating obtained through an outer jacket and steam flow; said reactors also comprising loading cells for dosing the raw material substrate to be converted, to check the batch weight and check the emptying of the reactor.

Then, at least one pump allows the recycling and/or transfer of the reactor.

The first separators may be:
- Preferably at least one vibrating screen, or other equivalent means, to separate the (coarse) solid fraction
- At least one decanter, or other equivalent means, to separate the solid fraction (finishing).

At least one pump is also provided for transferring the liquid fraction that is sent to second separators, such as at least a centrifuge, where the separation of the lipid fraction takes place.

Using at least one pump, the liquid protein fraction is transferred to at least one and preferably two reactors for vacuum concentration of the protein fraction, configured to work at low temperature (i.e. in a range of between 30 and 40 °C).

There are a number of tanks:
- At least two tanks for storing the lipid fraction
- At least one tank for storing the concentrated protein fraction,
- At least one tank for storing the condensation water,

All is managed by at least one PLC to control and manage the entire process.

### PROCESS

The subject process provides for the following steps:
- Grinding
   o Meat grinder with plates suitable for grinding with a range of 6 -10 mm)
- Transfer and mixing,
   o The raw material already ground (temperature range of from 0 °C to + 4 °C) is transferred by pumping into the reactor and the dosage thereof is checked with the loading cells with which the reactor is provided until the specified weight is achieved (range of 7000 - 8000 kg).
   ∘ During the addition, the stirrer is activated to prevent solidification phenomena
   o While charging the reactor, the temperature of the heating jacket is set to an initial value of 30 °C
- Heating
   o Once the raw material has been charged, the indirect heating starts through the jacked with setting on a scale of from 50 °C to 60 °C
- Alkalinization
   o During the heating process, alkalizing medium is added to the reactor to bring the pH to a value of between 7.5-9.0.
- Enzymatic hydrolysis reaction
   o Once the value of an alkaline pH (range of 7.5-9.0) and the reaction temperature (range of 55 °C - 60 °C) have been obtained, the proteolytic enzyme is added in an amount and type (modified enzymatic hydrolysis) suitable for the nature of the raw material substrate subject to processing (animal species, type of by-product, as indicated in the attached table).
   ∘ The enzymatic hydrolysis process is conducted for a time that ranges from 50 to 60 minutes, even 70 minutes in case of special meat, as shown in the table.
   ∘ At the end of the enzymatic hydrolysis process (stabilization of the pH to a value of 7.0-7.5), through indirect heating the batch temperature is raised for 10 - 12 minutes at a temperature of 81 °C - 85 °C to obtain the inactivation of the enzyme.
   o emptying of the reactor and transfer by pumping the fluid to the next process step.
- solid phase separation from the liquid phase;
   o the hot fluid is pumped from the reactor through a vibrating screen for the coarse separation with 4 - 6 mm meshes of the solid phase (bones). Afterwards, it goes through a decanter for the fine separation of the solid phase (separation of 0.5-1 mm fraction).
- solid phase drying, followed by a packaging thereof and solid phase identification,
- separation of the lipid fraction from the protein fraction with a centrifuge;
   o by said step, the fluid discharged from the decanter, devoid of the solid fraction, is pumped to a centrifuge for the separation of the lipid fraction that is collected in a dedicated container (tank). The other fluid separated by the centrifuge is the protein aqueous solution.
- lipid fraction stabilization,
   o addition of antioxidant (in accordance with the law requirements),
   o packaging and identification of the lipid fraction,
- low-temperature vacuum concentration of the protein fraction,
   o with a continuous concentration process under vacuum, the protein solution is concentrated up to a brix value of between 50° - 60°.
   ∘ By the effect of the vacuum degree set (700-720 mmHg), the process temperature does not exceed the value of 34-42 °C, a value lower than the evaporation temperature of 100 °C at atmospheric pressure).
   ∘ cooling, packaging and identification of the concentrated protein fraction.

A protein hydrolysate with nutraceutical functional features is obtained with the process described above.

## Claims

1. Process for making a protein hydrolysate with nutraceutical functional features obtained from process animal by-product of slaughterhouses, the process **characterized in that** it comprises at least the following steps to be carried out on said animal by-product:
a. Grinding with a meat grinder with plates suitable for grinding to a range 6-10 mm
b. Transfer and mixing:
▪ The raw material already ground at a temperature range of from 0 °C to + 4 °C is transferred by pumping into a reactor and the dosage thereof is checked with the loading cells with which the reactor is provided until the specified weight is achieved in a range of 7000 - 8000 kg
▪ During the addition, a stirrer is activated to prevent solidification phenomena
▪ While charging the reactor, the temperature of the heating jacket with which the reactor is provided is set to an initial value of 30 °C
c. Heating:
Once the raw material has been charged, the indirect heating starts through the jacket with setting on a scale of from 50-60°C
d. Alkalinization:
During the heating process, alkalizing medium is added to the reactor to bring the pH to a value of between 7.5-9.0.
e. Enzymatic hydrolysis reaction:
▪ Once the value of an alkaline pH in a range of 7.5-9.0 and the reaction temperature in a range of 55 °C - 60 °C have been obtained, the proteolytic enzyme is added in an amount and type suitable for the nature of the raw material substrate subject to processing, i.e. animal species, type of by-product, as indicated in the table of Figure 1.
▪ the enzymatic hydrolysis process is conducted for a time that ranges from 50 to 60 minutes, even 70 minutes in case of special meat, as shown in the table of Figure 1.
▪ At the end of the enzymatic hydrolysis process, i.e. stabilization of the pH to a value of 7.0-7.5, through indirect heating the batch temperature is raised for 10 - 12 minutes at a temperature of 81 °C - 85 °C to obtain the inactivation of the enzyme
▪ emptying of the reactor and transfer by pumping the fluid to the next process step.
f. Solid phase separation from the liquid phase:
the hot fluid is pumped from the reactor through a vibrating screen for the coarse separation with 4 - 6 mm meshes of the solid phase, i.e. bones. Afterwards, it goes through a decanter for the fine separation of the solid phase, i.e. separation of 0.5-1 mm fraction.
g. solid phase drying, followed by a packaging thereof and solid phase identification,
h. Lipid phase separation from protein phase with a centrifuge
▪ by said step, the fluid discharged from the decanter, devoid of the solid fraction, is pumped to a centrifuge for the separation of the lipid fraction that is collected in a dedicated tank. The other fluid separated by the centrifuge is the protein aqueous solution.
i. lipid fraction stabilization,
▪ addition of antioxidant,
▪ packaging and identification of the lipid fraction,
j. low-temperature vacuum concentration of the protein fraction,
▪ with a continuous concentration process under vacuum, the protein solution is concentrated up to a brix value of between 50° - 60°.
▪ By the effect of the vacuum degree set at 700-720 mmHg, the process temperature does not exceed the value of 34-42 °C, a value lower than the evaporation temperature of 100 °C at atmospheric pressure.
▪ cooling, packaging and identification of the concentrated protein fraction.

2. Process according to preceding claim wherein it is provided for controlling and managing the entire process by means of a PLC controller.

3. Plant for producing a protein hydrolysate with nutraceutical functional features obtained from the process animal by-product of slaughterhouses, according to one of the preceding claims, **characterized in that** it comprises at least:
a. A reactor with indirect steam-operated heating jacket,
b. a tube-bundle heat exchanger with indirect steam heating
c. A rotating shaft with adjustable speed inverter with propeller as stirrer
d. a solid fraction separator,
e. at least one pump for pumping a fluid to the solid fraction separator
f. a centrifugal separator for liquid fractions,
g. at least one pump for pumping the liquid fraction into the centrifuge
h. an under vacuum concentration system
i. at least one pump for pumping an oil free protein phase into the vacuum concentration system
j. at least one PLC
k. a series of transfer and/or storage tanks are provided to serve the equipment for both the products obtained and for the process fluids
l. at least one meat grinding device
m. loading cells of the reactors
n. at least one pump for the recycling and/or transferring of the reactor
o. at least two tanks for storing the lipid fraction
p. at least one tank for storing the concentrated protein fraction
q. at least one tank for storing the condensation water.

## Patentansprüche

1. Verfahren zur Herstellung eines Proteinhydrolysats mit nutrazeutischen Funktionseigenschaften, das aus tierischen Nebenprodukten aus Schlachthöfen gewonnen wird, wobei das Verfahren **dadurch gekennzeichnet ist, dass** es mindestens die folgenden Schritte umfasst, die an dem tierischen Nebenprodukt durchzuführen sind:
a. Zerkleinern mit einem Fleischwolf mit zum Zerkleinern geeigneten Platten auf eine Größe von 6-10 mm
b. Überführen und Mischen:
• Das bereits in einem Temperaturbereich von 0 °C bis + 4 °C zerkleinerte Rohstoffmaterial wird durch Pumpen in einen Reaktor überführt und dessen Dosierung mit den Wägezellen, mit denen der Reaktor versehen ist, überprüft, bis das angegebene Gewicht in einem Bereich von 7000 - 8000 kg erreicht ist
• Während der Zugabe wird ein Rührwerk aktiviert, um Erstarrungserscheinungen zu verhindern
• Während der Beschickung des Reaktors wird die Temperatur des Heizmantels, mit dem der Reaktor versehen ist, auf einen Anfangswert von 30 °C eingestellt
c. Erhitzen:
Nach dem Beschicken des Rohstoffmaterials beginnt die indirekte Erhitzung durch den Mantel mit einer Einstellung auf einer Skala von 50-60 °C.
d. Alkalisierung:
Während des Erhitzungsverfahrens wird dem Reaktor ein Alkalisierungsmedium zugesetzt, um den pH-Wert auf einen Wert zwischen 7,5 und 9,0 zu bringen.
e. Enzymatische Hydrolysereaktion:
• Sobald der Wert von einem alkalischen pH in einem Bereich von 7,5-9,0 und die Reaktionstemperatur in einem Bereich von 55 °C - 60 °C erreicht sind, wird das proteolytische Enzym in einer Menge und Typ zugegeben, die für die Art des zu verarbeitenden Rohstoffsubstrats, d. h. Tierart, Typ des Nebenprodukts, geeignet sind, wie in der Tabelle von Figur 1 angegeben.
• das enzymatische Hydrolyseverfahren wird für eine Zeit im Bereich von 50 bis 60 Minuten durchgeführt, im Falle von Spezialfleisch sogar 70 Minuten, wie in der Tabelle von Figur 1 gezeigt.
• Am Ende des enzymatischen Hydrolyseverfahrens, d. h. der Stabilisierung des pH-Werts auf einen Wert von 7,0-7,5, wird die Chargentemperatur durch indirekte Erhitzung für 10 - 12 Minuten auf eine Temperatur von 81 °C-85 °C erhöht, um die Inaktivierung des Enzyms zu erreichen.
• Entleeren des Reaktors und Überführen der Flüssigkeit durch Pumpen in den nächsten Verfahrensschritt.
f. Abtrennung der festen Phase von der flüssigen Phase:
Die heiße Flüssigkeit wird aus dem Reaktor durch ein Rüttelsieb gepumpt, um die feste Phase, d. h. die Knochen, mit einer Maschenweite von 4-6 mm grob abzutrennen. Anschließend durchläuft sie einen Dekanter zur Feinabtrennung der festen Phase, d. h. zur Abtrennung der 0,5-1 mm großen Fraktion.
g. Trocknung der festen Phase, gefolgt von deren Verpackung und Identifizierung der festen Phase,
h. Abtrennung der Lipidphase von der Proteinphase mit einer Zentrifuge
• durch diesen Schritt wird die aus dem Dekanter abgelassene, von der festen Fraktion befreite Flüssigkeit in eine Zentrifuge gepumpt, um die Lipidfraktion abzutrennen, die in einem speziellen Tank gesammelt wird. Die andere durch die Zentrifuge abgetrennte Flüssigkeit ist die wässrige Proteinlösung.
i. Stabilisierung der Lipidfraktion,
• Zugabe von Antioxidantien,
• Verpackung und Identifizierung der Lipidfraktion,
j. Niedertemperatur-Vakuumkonzentration der Proteinfraktion,
• Durch ein kontinuierliches Konzentrationsverfahren unter Vakuum wird die Proteinlösung bis zu einem Brixwert zwischen 50° und 60° konzentriert.
• Durch die Wirkung des auf 700-720 mmHg eingestellten Vakuumgrades überschreitet die Verfahrenstemperatur nicht den Wert von 34-42 °C, einen Wert, der niedriger ist als die Verdampfungstemperatur von 100 °C bei Atmosphärendruck.
• Kühlung, Verpackung und Identifizierung der konzentrierten Proteinfraktion.

2. Verfahren nach dem vorhergehenden Anspruch, wobei es für die Steuerung und Verwaltung des gesamten Verfahrens mittels einer SPS-Steuerung gesorgt wird.

3. Anlage zum Produzieren eines Proteinhydrolysats mit nutrazeutischen Funktionseigenschaften, das aus dem tierischen Nebenprodukt aus Schlachthöfen nach einem der vorhergehenden Ansprüche gewonnen wird, **dadurch gekennzeichnet, dass** sie mindestens umfasst:
a. einen Reaktor mit indirektem dampfbetriebenen Heizmantel,
b. einen Rohrbündelwärmetauscher mit indirekter Dampfbeheizung
c. eine rotierende Welle mit drehzahlregulierbarem Inverter mit Propeller als Rührwerk
d. einen Abtrenner der festen Fraktion,
e. mindestens eine Pumpe zum Pumpen einer Flüssigkeit zum Abtrenner der festen Fraktion
f. einen Zentrifugalabtrenner für flüssige Fraktionen,
g. mindestens eine Pumpe zum Pumpen der flüssigen Fraktion in die Zentrifuge
h. ein Untervakuum-Konzentrationssystem
i. mindestens eine Pumpe zum Pumpen einer ölfreien Proteinphase in das Vakuum-Konzentrationssystem
j. mindestens eine SPS
k. eine Reihe von Transfer- und/oder Lagertanks sind vorgesehen, um die Ausrüstung sowohl für die gewonnenen Produkte als auch für die Verfahrensflüssigkeiten zu versorgen
l. mindestens eine Fleischzerkleinerungsvorrichtung
m. Wägezellen der Reaktoren
n. mindestens eine Pumpe zur Rückführung und/oder Überführung des Reaktors
o. mindestens zwei Tanks zum Lagern der Lipidfraktion
p. mindestens einen Tank zum Lagern der konzentrierten Proteinfraktion
q. mindestens einen Tank zum Lagern des Kondenswassers.

## Revendications

1. Procédé de fabrication d'un hydrolysat de protéines présentant des caractéristiques fonctionnelles nutraceutiques obtenu à partir de sous-produits animaux issus d'abattoirs, le procédé étant **caractérisé en ce qu'**il comprend au moins les étapes suivantes à réaliser sur lesdits sous-produits animaux :
a. le broyage à l'aide d'un hachoir à viande équipé de plaques adaptées à un broyage dans une plage de 6 à 10 mm
b. le transfert et le mélange :
• la matière première déjà broyée à une température comprise entre 0°C et + 4°C est transférée par pompage dans un réacteur et son dosage est contrôlé à l'aide des cellules de chargement dont est équipé le réacteur jusqu'à ce que le poids spécifié soit atteint dans une plage de 7000 à 8000 kg
• pendant l'ajout, un agitateur est activé pour empêcher les phénomènes de solidification
• pendant le chargement du réacteur, la température de la chemise de chauffage dont est équipé le réacteur est réglée à une valeur initiale de 30°C
c. le chauffage :
une fois la matière première chargée, le chauffage indirect commence à travers la chemise avec un réglage sur une échelle de 50 à 60°C
d. l'alcalinisation :
pendant le processus de chauffage, un milieu alcalinisant est ajouté au réacteur pour amener le pH à une valeur comprise entre 7,5 et 9,0.
e. la réaction d'hydrolyse enzymatique :
• une fois que la valeur d'un pH alcalin est compris entre 7,5 et 9,0 et que la température de réaction est comprise entre 55°C et 60°C, l'enzyme protéolytique est ajoutée en quantité et de type adaptés à la nature du substrat de matière première à traiter, c'est-à-dire l'espèce animale, le type de sous-produit, comme indiqué dans le tableau de la figure 1.
• le processus d'hydrolyse enzymatique est mené pendant une durée comprise entre 50 et 60 minutes, voire 70 minutes dans le cas de viandes spéciales, comme indiqué dans le tableau de la figure 1.
• à la fin du processus d'hydrolyse enzymatique, c'est-à-dire lorsque le pH est stabilisé à une valeur comprise entre 7,0 et 7,5, la température du lot est augmentée par chauffage indirect pendant 10 à 12 minutes à une température comprise entre 81°C et 85°C afin d'obtenir l'inactivation de l'enzyme
• la vidange du réacteur et le transfert par pompage du fluide vers l'étape suivante du processus.
f. la séparation de la phase solide de la phase liquide :
le fluide chaud est pompé hors du réacteur à travers un tamis vibrant pour une séparation grossière avec des mailles de 4 à 6 mm de la phase solide, c'est-à-dire les os. Il passe ensuite dans un décanteur pour la séparation fine de la phase solide, c'est-à-dire la séparation de la fraction de 0,5 à 1 mm.
g. le séchage de la phase solide, suivi de son conditionnement et de l'identification de la phase solide,
h. la séparation de la phase lipidique de la phase protéique à l'aide d'une centrifugeuse
• lors de ladite étape, le fluide évacué du décanteur, dépourvu de la fraction solide, est pompé vers une centrifugeuse pour la séparation de la fraction lipidique qui est recueillie dans un réservoir dédié. L'autre fluide séparé par la centrifugeuse est la solution aqueuse protéique.
i. la stabilisation de la fraction lipidique,
• l'ajout d'antioxydant,
• le conditionnement et l'identification de la fraction lipidique,
j. la concentration sous vide à basse température de la fraction protéique,
• grâce à un processus de concentration continu sous vide, la solution protéique est concentrée jusqu'à une valeur Brix comprise entre 50° et 60°.
• grâce à l'effet du degré de vide réglé entre 700 et 720 mmHg, la température du processus ne dépasse pas 34-42°C, une valeur inférieure à la température d'évaporation de 100°C au niveau d'une pression atmosphérique.
• le refroidissement, le conditionnement et l'identification de la fraction protéique concentrée.

2. Procédé selon la revendication précédente, dans lequel il est prévu de contrôler et de gérer l'ensemble du processus au moyen d'un contrôleur PLC.

3. Installation pour la production d'un hydrolysat de protéines présentant des caractéristiques fonctionnelles nutraceutiques obtenu à partir du processus de sous-produits animaux issus d'abattoirs, selon l'une des revendications précédentes, **caractérisée en ce qu'**elle comprend au moins :
a. un réacteur avec une chemise de chauffage à vapeur indirecte,
b. un échangeur de chaleur à faisceau tubulaire avec chauffage à vapeur indirecte
c. un arbre rotatif avec un variateur de vitesse réglable et une hélice comme agitateur
d. un séparateur de fractions solides,
e. au moins une pompe pour pomper un fluide vers le séparateur de fractions solides
f. un séparateur centrifuge pour les fractions liquides,
g. au moins une pompe pour pomper la fraction liquide dans la centrifugeuse
h. un système de concentration sous vide
i. au moins une pompe pour pomper une phase protéique exempte d'huile dans le système de concentration sous vide
j. au moins un PLC
k. une série de réservoirs de transfert et/ou de stockage sont prévus pour alimenter l'équipement à la fois pour les produits obtenus et pour les fluides de traitement
l. au moins un dispositif de broyage de viande
m. des cellules de chargement des réacteurs
n. au moins une pompe pour le recyclage et/ou le transfert du réacteur
o. au moins deux réservoirs pour le stockage de la fraction lipidique
p. au moins un réservoir pour le stockage de la fraction protéique concentrée
q. au moins un réservoir pour le stockage de l'eau de condensation.
